(19) Europäisches Patentamt
European Patent Office
Office européen des brevets

(11) **EP 4 495 620 B1**

(12) **EUROPÄISCHE PATENTSCHRIFT**

(45) Veröffentlichungstag und Bekanntmachung des Hinweises auf die Patenterteilung:
**04.06.2025  Patentblatt 2025/23**

(21) Anmeldenummer: **23186929.8**

(22) Anmeldetag: **21.07.2023**

(51) Internationale Patentklassifikation (IPC):
**G01S 7/40** *(2006.01)*      **G01S 7/497** *(2006.01)*

(52) Gemeinsame Patentklassifikation (CPC):
**G01S 7/40; G01S 7/4052; G01S 7/497; G01S 7/4972**

(54) **VERFAHREN ZUR BESTIMMUNG EINER SENSOREINSTELLUNG**

METHOD FOR DETERMINING A SENSOR SETTING

PROCÉDÉ DE DÉTERMINATION D'UN RÉGLAGE DE CAPTEUR

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**22.01.2025  Patentblatt 2025/04**

(73) Patentinhaber: **SICK AG**
**79183 Waldkirch (DE)**

(72) Erfinder:
• **Wittmeier, Steffen**
  **79183 Waldkirch (DE)**
• **Ruh, Dominic**
  **79102 Freiburg im Breisgau (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
**US-A1- 2023 169 684      US-B2- 11 663 377**
**US-B2- 9 740 944**

# EP 4 495 620 B1

**Beschreibung**

Die Erfindung betrifft ein Verfahren und ein System zur Bestimmung einer Einstellung eines Sensors.

Die Bestimmung einer geeigneten Sensoreinstellung für einen Sensor, wie beispielsweise einen Laserscanner und dergleichen, ist ein komplexer Prozess und wird in der Regel durch einen entsprechenden Experten vorgenommen, indem der Experte basierend auf seinem Wissen und seiner Erfahrung beispielsweise eine optimale Montageposition und/oder -ausrichtung sowie eine optimale Sensorkonfiguration der sensorspezifischen Sensorparameter manuell aussucht. Dabei wird beispielsweise die Sensoreinstellung eines realen Sensors iterativ angepasst und die jeweiligen Sensordaten von dem Experten ausgewertet, bis eine gewünschte Sensoreinstellung erreicht wird, welche den subjektiven Anforderungen des Experten genügt.

Die bestehende Vorgehensweise bei der Bestimmung einer geeigneten Sensoreinstellung hat jedoch den Nachteil, dass die manuelle Iteration zur Bestimmung der Sensoreinstellung, insbesondere an einem realen Sensor, sehr zeitaufwendig ist. Ferner erfordert der Sensoreinstellungsprozess, dass ein Experte bei der Montage und Konfiguration des Sensors vor Ort anwesend ist. Darüber hinaus ist eine dynamische Anpassung der Sensoreinstellung im laufenden Betrieb des Sensors, beispielsweise eine Anpassung an eine sich verändernde Umgebung des Sensors, nicht möglich.

Die Druckschrift US 11 663 377 B2 offenbart ein Verfahren zur Bestimmung einer Einstellung eines Sensors gemäß dem Oberbegriff des Anspruchs 1 und ein System zur Bestimmung einer Einstellung eines Sensors gemäß dem Oberbegriff des Anspruchs 14. Die Druckschriften US 2023/169684 A1 und US 9 740 944 B2 offenbaren ähnliche Verfahren und Systeme.

Eine der Erfindung zugrundeliegende Aufgabe ist es somit, ein Verfahren sowie ein System zur Bestimmung einer Einstellung eines Sensors bereitzustellen, welche die vorstehenden Probleme behebt.

Diese Aufgabe wird durch die Gegenstände der unabhängigen Ansprüche gelöst.

Die Erfindung ist im beigefügten Anspruchssatz beschrieben.

Die Erfindung betrifft ein Verfahren zur Bestimmung einer Einstellung eines Sensors, wobei das Verfahren mittels einer Recheneinrichtung ausgeführt wird und umfasst, dass:

(1) ein Simulationsmodell definiert wird, das eine virtuelle Testumgebung und zumindest einen virtuellen Sensor umfasst;

(2) in der virtuellen Testumgebung der virtuelle Sensor mit einer Sensoreinstellung initialisiert wird, wobei die Sensoreinstellung eine Sensorposition, eine Sensorausrichtung und/oder zumindest einen Sensorparameter umfasst;

(3) von dem virtuellen Sensor erzeugte virtuelle Sensordaten, die der Sensoreinstellung zugeordnet sind, basierend auf zumindest einer Evaluierungsmetrik evaluiert werden, wobei in die jeweilige Evaluierungsmetrik ein Erfassungsbereich des virtuellen Sensors eingeht, wobei die Evaluierung der Sensordaten umfasst, dass:

(4) festgestellt wird, ob die Evaluierungsmetrik zumindest eine vorgegebene Bedingung erfüllt;

(5) bei einer negativen Feststellung die Sensoreinstellung des virtuellen Sensors, angepasst wird und die der angepassten Sensoreinstellung zugehörigen Sensordaten gemäß (3) evaluiert werden;

(6) bei einer positiven Feststellung die Sensoreinstellung als bevorzugte Sensoreinstellung von der Recheneinrichtung ausgegeben wird; und

(7) ein realer Sensor in einer realen Anwendung basierend auf der bevorzugten Sensoreinstellung konfiguriert wird.

Es wird also ein Sensor in einer virtuellen, insbesondere zwei- oder dreidimensionalen, Welt simuliert, um virtuelle Sensordaten zu erzeugen, welche durch das Erfassen der virtuellen Welt durch den virtuellen Sensor entstehen. Erfindungsgemäß wird eine Sensoreinstellung des virtuellen Sensors in der virtuellen Testumgebung beliebig oft manuell oder automatisch angepasst, bis eine bevorzugte Sensoreinstellung gefunden wird, welche anschließend zur Konfiguration eines realen Sensors in einer realen Anwendung verwendet wird. Das Kriterium, wonach entschieden wird, ob eine Sensoreinstellung eine bevorzugte Sensoreinstellung darstellt, wird durch eine Evaluierungsmetrik definiert, wobei die Evaluierungsmetrik eine vorgegebene Bedingung erfüllen muss, damit eine Sensoreinstellung als bevorzugte Sensoreinstellung ausgegeben wird. Erfüllt die Evaluierungsmetrik die vorgegebene Bedingung nicht, so wird die Sensoreinstellung des virtuellen Sensors, insbesondere unter Verwendung eines Optimierungsverfahrens, angepasst und die zugehörigen Sensordaten erneut evaluiert.

Mit dem vorliegenden Verfahren wird somit eine bevorzugte Sensoreinstellung eines virtuellen Sensors in einer virtuellen Testumgebung ermittelt und die ermittelte bevorzugte Sensoreinstellung anschließend zur Konfiguration eines realen Sensors in einer realen Anwendung verwendet. Die Ermittlung der bevorzugten Sensoreinstellung kann somit rein virtuell erfolgen, ohne die Notwendigkeit, dass ein realer Sensor zur Erzeugung von realen Sensordaten vorhanden ist. Insbesondere können sämtliche Schritte zur Ermittlung der bevorzugten Sensoreinstellung rein virtuell erfolgen. Beispielsweise kann das Simulationsmodell auf einer Recheneinrichtung implementiert sein, welche alle erforderlichen Berechnungen zur Simulation der virtuellen Testumgebung und des virtuellen Sensors ausführt.

2

Die virtuelle Testumgebung kann beispielsweise einer 1-zu-1-Nachbildung einer realen Umgebung entsprechen, z.B. einer realen Umgebung, in der der reale Sensor eingesetzt werden soll. Somit können auch die von dem virtuellen Sensor erzeugten virtuellen Sensordaten zumindest im Wesentlichen denen eines realen Sensors entsprechen. Dadurch, dass die virtuelle Testumgebung und die reale Umgebung sowie die erzeugten virtuellen Sensordaten und die realen Sensordaten einander entsprechen oder zumindest vergleichbar sind, kann auch die für den virtuellen Sensor verwendete Sensoreinstellung zumindest im Wesentlichen unverändert als Sensoreinstellung des realen Sensors verwendet werden. Bekannte Unterschiede zwischen der virtuellen Testumgebung und der realen Umgebung und/oder der virtuellen Sensordaten und der realen Sensordaten können bei der Konfiguration des realen Sensors berücksichtigt werden, indem beispielsweise einzelne Parameter vorab eingestellt werden oder auf der Grundlage einer voreingestellten Anpassungsregel angepasst werden.

Wie bereits vorab beschrieben umfasst die Sensoreinstellung eine Sensorposition, eine Sensorausrichtung und/oder zumindest einen Sensorparameter. Insbesondere umfasst die Sensoreinstellung intrinsische Sensordaten, wie beispielsweise ein Scan-Pattern des Sensors, eine Messfrequenz, Eigenschaften des Messsignals, z.B. die Form, den Frequenzhub und/oder die Steilheit der Frequenzmodulation des Sendesignals (z.B. bei FMCW). Die bevorzugte Sensoreinstellung ist insbesondere abhängig von dem spezifischen Anwendungsfall. Demnach können für die jeweiligen Sensorparameter unterschiedliche Wertebereiche vorgegeben sein, die abhängig von den jeweiligen Sensorspezifikationen nicht überschritten werden können oder dürfen.

Die von dem virtuellen Sensor erzeugten virtuellen Sensordaten umfassen insbesondere Raumdaten der virtuellen Testumgebung, Raumdaten der virtuellen Objekte und/oder Positions- und/oder Ausrichtungsdaten des virtuellen Sensors. Der virtuelle Sensor kann beispielsweise einen simulierten LiDAR-Sensor, FMCW-basierten Sensor, Radarsensor, eine simulierte Kamera und/oder andere geeignete Sensoren umfassen.

Wie bereits vorab beschrieben wird bei der Evaluierungsmetrik ein, insbesondere räumlicher, Erfassungsbereich des virtuellen Sensors berücksichtigt. Das bedeutet, dass die Evaluierungsmetrik, auf welcher basierend entschieden wird, ob eine Sensoreinstellung als bevorzugte Sensoreinstellung ausgewählt wird, auf dem Erfassungsbereich des virtuellen Sensors basiert. Beispielsweise kann die Evaluierungsmetrik angeben, inwiefern ein vorgegebener Bereich, beispielsweise ein vorgegebener Raum oder eine vorgegebene Fläche, in der virtuellen Testumgebung von dem Erfassungsbereich des virtuellen Sensors abgedeckt wird. Insbesondere kann festgestellt werden, ob die Evaluierungsmetrik zumindest eine vorgegebene Bedingung erfüllt, z.B. ob der Erfassungsbereich des virtuellen Sensors mindestens 70% des vorgegebenen Bereichs abdeckt. Für einen solchen Fall kann die Sensoreinstellung des virtuellen Sensors so lange angepasst werden, bis die vorstehende Bedingung erfüllt ist, wobei erst wenn die vorstehende Bedingung erfüllt ist, d.h. wenn der Erfassungsbereich des virtuellen Sensors zumindest 70% des vorgegebenen Bereichs abdeckt, die entsprechende Sensoreinstellung als bevorzugte Sensoreinstellung ausgegeben wird und zur Konfiguration des realen Sensors in der realen Anwendung verwendet werden kann. Die Evaluierungsmetrik kann insbesondere je nach Anwendungsfall unterschiedlich sein und zusätzliche oder andere als die vorstehend genannten Metriken berücksichtigen.

Ist eine bevorzugte Sensoreinstellung ermittelt worden, kann diese und/oder zumindest ein Teil der virtuellen Sensordaten in einem für einen realen Sensor lesbarem Format gespeichert und exportiert werden, um den realen Sensor mit der bevorzugten Sensoreinstellung zu konfigurieren. Der reale Sensor kann beispielsweise einen LiDAR-Sensor, einen FMCW-basierten Sensor, einen Radarsensor, eine Kamera und/oder andere geeignete Sensoren umfassen.

Weitere Ausführungsformen der Erfindung sind der Beschreibung, den Unteransprüchen sowie den Zeichnungen zu entnehmen.

Gemäß einer ersten Ausführungsform erfolgt die Evaluierung der Sensordaten automatisch. Beispielsweise wird das Verfahren mithilfe eines Algorithmus implementiert, wobei die vorstehenden Verfahrensschritte automatisch von dem Algorithmus ausgeführt werden. Insbesondere kann die Evaluierungsmetrik derart ausgestaltet sein, dass ein Computer überprüfen kann, ob die Evaluierungsmetrik die vorgegebene Bedingung erfüllt. Die Evaluierungsmetrik kann beispielsweise derart ausgestaltet sein, dass sie durch einen Zahlenwert dargestellt werden kann. Wie vorstehend beschrieben kann beispielsweise der Zahlenwert angeben, wieviel Prozent eines vorgegebenen Raumbereichs durch den Erfassungsbereichs des virtuellen Sensors abgedeckt werden.

Der Vorteil einer automatischen Implementierung des Verfahrens liegt darin, dass eine bevorzugte Sensoreinstellung schnell und ohne das Vorhandensein eines Benutzers ermittelt werden kann. Vielmehr kann das Benutzerwissen beispielsweise in den Algorithmus und insbesondere in der Konfiguration der Evaluierungsmetrik implementiert sein. Beispielsweise kann ein Benutzer basierend auf seinem Wissen die Evaluierungsmetrik derart einstellen, dass die Ausführung des Algorithmus zu einer bevorzugten bzw. optimalen Sensoreinstellung führt, welche durch eine manuelle Ermittlung der Sensoreinstellung mittels eines Benutzers erzielt werden würde. Die Evaluierungsmetrik kann beispielsweise eine Optimierungsfunktion umfassen, deren Argumente Sensoreinstellungsparameter umfassen und welche derart ausgestaltet ist, dass ein Extremwert, d.h. ein Minimum oder Maximum, der Optimierungsfunktion einer bevorzugten Sensoreinstellung bzw. bevorzugten Sensoreinstellungsparametern entspricht. Durch die Ermittlung des Extremwerts der Optimierungsfunktion kann somit die bevorzugte Sensoreinstellung ermittelt werden. Die Ermittlung des

EP 4 495 620 B1

Extremwerts der Optimierungsfunktion kann ferner unter Verwendung bekannter Optimierungsalgorithmen, wie z.B. des Gradientenverfahrens, des Intervallhalbierungsverfahrens und dergleichen, erfolgen.

Alternativ kann die Evaluierung der Sensordaten auch manuell erfolgen, indem beispielsweise ein Benutzer die Evaluierungsmetrik auswertet bzw. überprüft, ob die Evaluierungsmetrik die vorgegebene Bedingung erfüllt. Hierzu kann der Benutzer beispielsweise die virtuellen Sensordaten und/oder eine Visualisierung der virtuellen Sensordaten verwenden. Beispielsweise kann der Benutzer die virtuellen Sensordaten und/oder die Visualisierung der virtuellen Sensordaten iterativ auswerten, bis dieser basierend auf der Evaluierungsmetrik eine Sensoreinstellung als bevorzugte Sensoreinstellung festlegt. Der Vorteil einer manuellen Evaluierung der Sensordaten liegt beispielsweise darin, dass spezielle Fälle, beispielsweise Ausnahmefälle, welche ein Algorithmus nicht optimal handhaben kann, d.h. welche für eine automatische Evaluierung ungeeignet sind, individuell behandelt werden können.

Es ist auch denkbar, dass die Evaluierung der Sensordaten in einem ersten Schritt automatisch erfolgt und in einem zweiten Schritt die in dem ersten Schritt gefundene Sensoreinstellung manuell angepasst wird, um eine verbesserte Sensoreinstellung zu erhalten oder um eine im ersten Schritt gefundene Sensoreinstellung zu überprüfen.

Gemäß einer weiteren Ausführungsform beruht die Evaluierungsmetrik auf einem Vergleich zwischen einem Erfassungsbereich des virtuellen Sensors und einem vorgegebenen Bereich in der virtuellen Testumgebung. Beispielsweise wird der Erfassungsbereich des virtuellen Sensors mit einem vorgegebenen Bereich der virtuellen Testumgebung verglichen, um zu ermitteln, welcher Anteil des Bereichs durch den Erfassungsbereich des virtuellen Sensors erfasst bzw. abgedeckt wird. Wie bereits vorab beschrieben, kann die Evaluierungsmetrik den Anteil der Abdeckung des vorgegebenen Bereichs durch den Erfassungsbereich des virtuellen Sensors angeben. Der Erfassungsbereich des virtuellen Sensors kann beispielsweise durch das Scan-Pattern des virtuellen Sensors und/oder durch den Messdistanzbereich, d.h. der Reichweite, des virtuellen Sensors festgelegt sein.

Gemäß einer weiteren Ausführungsform geht in die Evaluierungsmetrik ein vorgegebener Messdistanzbereich des virtuellen Sensors ein, wobei der vorgegebene Messdistanzbereich einen Bereich festlegt, in welchem der virtuelle Sensor plausible Messwerte erzeugt. Plausibel bedeutet beispielsweise, dass der virtuelle Sensor keine Fehlerwerte oder keine Werte erzeugt, welche außerhalb eines für die jeweilige Anwendung sinnvollen Wertebereichs liegt. Der virtuelle Sensor kann beispielsweise für einen bestimmten Messdistanzbereich ausgelegt sein.

Der Messdistanzbereich des virtuellen Sensors kann ferner einem Messdistanzbereich des zugehörigen realen Sensors entsprechen. Da die Evaluierungsmetrik auch den vorgegebenen Messdistanzbereich des virtuellen Sensors berücksichtigt, wird die bevorzugte Sensoreinstellung somit auch abhängig von dem vorgegebenen Messdistanzbereich des Sensors ermittelt. Ein Sensor kann beispielsweise unterschiedliche Sensorparameterkonfigurationen aufweisen, durch die unterschiedliche Messdistanzbereiche eingestellt werden können. Für die unterschiedlichen Messdistanzbereiche des virtuellen Sensors können somit unterschiedliche bevorzugte Sensoreinstellungen ermittelt und gespeichert werden. Beispielsweise können in einem solchen Fall mehrere bevorzugte Sensoreinstellungen, welche jeweils einem zugehörigen Messdistanzbereich zugeordnet sind, ausgegeben und gespeichert werden. Der reale Sensor kann anschließend abhängig vom gewünschten Messdistanzbereich basierend auf den mehreren bevorzugten Sensoreinstellungen konfiguriert werden. Wenn sich die Anforderungen an den Messdistanzbereich, d.h. der gewünschte Messdistanzbereich, im laufenden Betrieb des realen Sensors ändert, so kann der reale Sensor basierend auf den mehreren bevorzugten Sensoreinstellungen, insbesondere automatisch, angepasst werden. Die Sensoreinstellung des realen Sensors wird somit adaptiv an den gewünschten Messdistanzbereich angepasst.

Die Evaluierungsmetrik umfasst einen Evaluierungsfunktionswert, wobei der Optimierungsfunktionswert mittels einer Optimierungsfunktion und basierend auf den virtuellen Sensordaten berechnet wird, wobei die vorgegebene Bedingung umfasst, dass der Optimierungsfunktionswert einem im Wesentlichen minimalen Wert oder einem im Wesentlichen maximalen Wert der Optimierungsfunktion entspricht. Die Optimierungsfunktion kann beispielsweise derart ausgestaltet sein, dass durch Lösen des entsprechenden Optimierungsproblems, d.h. durch ein Ermitteln des entsprechenden minimalen Funktionswerts bzw. des maximalen Funktionswerts der Optimierungsfunktion, eine Sensoreinstellung ermittelt wird, welche den vordefinierten Anforderungen genügt. Wie vorher beschrieben, kann beispielsweise eine Anforderung sein, dass ein vorbestimmter Anteil eines Raumbereichs der virtuellen Testumgebung durch den Erfassungsbereich des virtuellen Sensors, insbesondere für einen vorgegebenen Messdistanzbereich, abgedeckt wird. Die Optimierungsfunktion kann ferner derart ausgestaltet sein, dass zusätzliche oder andere Anforderungen bei der Bestimmung der Sensoreinstellung berücksichtigt werden. Der Optimierungsfunktionswert ist insbesondere ein Zahlenwert, der beispielsweise wie folgt berechnet wird:

$$Optimierungsfunktionswert = f(Sensoreinstellungsparameter, virtuelle\ Sensordaten)$$

wobei $f$ die mathematische Funktion darstellt, die die Sensoreinstellungsparameter und die virtuellen Sensordaten auf den Optimierungsfunktionswert abbildet. Umfasst die Evaluierungsmetrik einen Optimierungsfunktionswert, so kann die vorgegebene Bedingung erfüllt sein, wenn die Differenz zwischen dem

Optimierungsfunktionswert und dem Optimierungsfunktionswert einer vorherigen Iteration kleiner als ein vorgegebener Schwellenwert ist. Alternativ kann, wie für Optimierungsprobleme bekannt, eine Ableitung der Optimierungsfunktion gebildet werden, wobei die vorgegebene Bedingung erfüllt sein kann, wenn der Wert der Ableitung der Optimierungsfunktion kleiner als ein vorgegebener Schwellenwert ist. **In** beiden vorstehenden Fällen kann das Erfüllen der Bedingung bedeuten, dass der minimale Funktionswert bzw. der maximale Funktionswert der Optimierungsfunktion gefunden wurde, d.h. dass das Optimierungsproblem gelöst wurde.

Beispielsweise kann die Optimierungsfunktion f einer Funktion entsprechen, welche die Fläche oder den Anteil der Fläche des vorgegebenen Bereichs angibt, welcher nicht von dem Erfassungsbereich des virtuellen Sensors oder gegebenenfalls von mehreren virtuellen Sensoren abgedeckt wird. Das Minimum dieser Optimierungsfunktion entspricht somit den Sensoreinstellungsparametern, für die der Optimierungsfunktionswert, d.h. der Anteil des unerfassten Bereichs des vorgegebenen Bereichs, minimal wird. Unter Verwendung eines Optimierungsverfahrens, wie beispielsweise des Gradientenverfahrens, kann iterativ das Minimum der Optimierungsfunktion und somit die bevorzugte Sensoreinstellung ermittelt werden. Insbesondere können sukzessiv Sensoreinstellungen ermittelt werden, welche sich der bevorzugten Sensoreinstellung annähern.

Gemäß einer weiteren Ausführungsform umfassen die Sensordaten Informationen, insbesondere Daten, zu Orientierungspunkten, wobei die Orientierungspunkte zumindest einem festen Ortspunkt in der virtuellen Testumgebung zugeordnet sind, wobei basierend auf den Orientierungspunkten und den Sensordaten des realen Sensors eine Konfiguration der Sensoreinstellung des realen Sensors in der realen Anwendung erfolgt. Die Orientierungspunkte entsprechen beispielsweise Bezugspunkten in der virtuellen Testumgebung, die in entsprechender Weise auch in der realen Umgebung vorzufinden sind. Die Orientierungspunkte können beispielsweise festen Koordinaten in der virtuellen Testumgebung zugeordnet sein. Basierend auf den Orientierungspunkten kann ferner eine, insbesondere eindeutige, räumliche Beziehung zwischen dem virtuellen Sensor und dem Orientierungspunkt bzw. den Koordinaten des Orientierungspunkts hergestellt werden. Je nach Sensoreinstellung, insbesondere je nach Position und/oder Ausrichtung des virtuellen Sensors, kann sich somit die räumliche Beziehung zwischen dem virtuellen Sensor und dem Orientierungspunkt verändern, so dass eine Sensoreinstellung, insbesondere die Position und/oder Ausrichtung des virtuellen Sensors, einer eindeutigen räumlichen Beziehung zugeordnet werden kann. Entsprechend kann das Koordinatensystem des realen Sensors, d.h. die Position und/oder Ausrichtung des realen Sensors, basierend auf den Orientierungspunkten und den Sensordaten des realen Sensors angepasst werden, um die dem virtuellen Sensor entsprechende bevorzugte Sensoreinstellung zu erhalten.

Gemäß einer weiteren Ausführungsform wird die Position und/oder Ausrichtung des realen Sensors basierend auf den Orientierungspunkten ermittelt. Beispielsweise werden die Sensordaten des realen Sensors, z.B. die erfassten Umgebungsdaten, mittels der Orientierungspunkte analysiert bzw. verarbeitet. Die Analyse der Sensordaten des realen Sensors kann beispielsweise umfassen, dass die den Orientierungspunkten entsprechenden Raumpunkte der erfassten Umgebung detektiert und/oder klassifiziert werden, um eine räumliche Beziehung zwischen dem realen Sensor und den den Orientierungspunkten zugeordneten Raumpunkten der realen Umgebung zu ermitteln. Somit kann eine aktuelle Sensoreinstellung des realen Sensors, insbesondere die Position und/oder Ausrichtung des realen Sensors in Bezug zu den Orientierungspunkten zugeordneten Raumpunkten, ermittelt werden. Anschließend kann die Sensoreinstellung des realen Sensors, d.h. die Position und/oder Ausrichtung des realen Sensors, derart angepasst werden, dass die räumliche Beziehung zwischen dem realen Sensor und den den Orientierungspunkten entsprechenden Raumdaten der realen Umgebung der räumlichen Beziehung zwischen dem virtuellen Sensor und den jeweiligen Orientierungspunkten entspricht. Die Position und/oder Ausrichtung des realen Sensors kann beispielsweise basierend auf zumindest einem Orientierungspunkt ermittelt werden. Je mehr Orientierungspunkte zur Ermittlung der Position und/oder Ausrichtung des realen Sensors verwendet werden, desto höher ist dabei die Genauigkeit, mit der die Positionierung und/oder die Ausrichtung des realen Sensors an die Positionierung und/oder Ausrichtung des virtuellen Sensors angepasst werden kann.

Mit anderen Worten wird das Koordinatensystem des realen Sensors dem Koordinatensystem des virtuellen Sensors entsprechend angepasst. Die den Orientierungspunkten entsprechenden Raumpunkte der realen Umgebung können ferner mittels Klassifikationsalgorithmen, z.B. mittels Machine-Learning, detektiert werden. Die Orientierungspunkte können beispielsweise Objekte in der virtuellen Testumgebung, markante Punkte in der virtuellen Testumgebung und/oder beliebige andere Koordinatenpunkte in der virtuellen Testumgebung umfassen. Die Orientierungspunkte können ferner automatisch durch einen Algorithmus und/oder manuell durch einen Benutzer festgelegt werden.

Gemäß einer weiteren Ausführungsform steht der reale Sensor mit einer Sensorkonfigurationsapplikation in Verbindung, wobei mittels der Sensorkonfigurationsapplikation die Sensoreinrichtung des realen Sensors basierend auf der bevorzugten Sensoreinstellung konfiguriert wird. Die Sensorkonfigurationsapplikation kann somit ein Interface darstellen, über das der reale Sensor von dem Benutzer konfiguriert werden kann. Die Sensorkonfigurationsapplikation kann beispielsweise eine App auf einem Mobiltelefon, einen Laptop, eine PC und/oder eine andere geeignete Rechenvorrichtung umfassen. Die Sensorkonfigurationsapplikation kann ferner mit dem realen Sensor drahtlos oder mittels eines Kabels verbunden sein, um Daten, insbesondere in Echtzeit, auszutauschen. Ein Benutzer der Sensorkonfigurationsapplikation kann durch die Sensorkonfigurationsapplikation, beispielsweise über eine Anzeige der Sensorkonfigurationsapplikation, Anweisungen erhalten, um eine Position und/oder Ausrichtung des Sensors zu verändern.

Beispielsweise kann der Benutzer der Sensorkonfigurationsapplikation so lange Anweisungen erhalten, bis die bevorzugte Sensoreinstellung erreicht wird. Insbesondere können die Anweisungen dem Benutzer in Form einer Anleitung bereitgestellt werden.

Ferner können die Sensordaten des realen Sensors mittels der Sensorkonfigurationsapplikation, z.B. auf der vorstehend genannten Anzeige, visualisiert werden, so dass der Benutzer der Sensorkonfigurationsapplikation ein Gefühl dafür erhält, welche Auswirkung eine Änderung der Sensoreinstellung auf die erzeugten Sensordaten hat. Hierdurch kann ein verbessertes Nutzererlebnis bereitgestellt werden. Beispielsweise wird der Erfassungsbereich des realen Sensors visualisiert. Alternativ kann die Sensorkonfigurationsapplikation die Konfiguration der Sensoreinstellung des realen Sensors automatisch vornehmen, so dass der Nutzer keine manuellen Schritte vornehmen muss. Insbesondere ist die Sensorkonfigurationsapplikation unabhängig von dem Simulationsmodell betreibbar.

Gemäß einer weiteren Ausführungsform wird eine finale Sensoreinstellung des realen Sensors basierend auf der bevorzugten Sensoreinstellung und den Informationen zu den Orientierungspunkten manuell oder automatisch ermittelt. Beispielsweise hat der Benutzer der Sensorkonfigurationsapplikation, nachdem eine automatische Konfiguration der Sensoreinstellung erfolgt ist, noch die Möglichkeit, eine manuelle Feinjustierung der Sensoreinstellung vorzunehmen, d.h. die bevorzugte Sensoreinstellung wird von dem Benutzer angepasst. Alternativ kann eine abschließende Feinjustierung der Sensoreinstellung automatisch durch die Sensorkonfigurationsapplikation erfolgen. Beispielsweise nutzt die Sensorkonfigurationsapplikation die vorab erwähnten Orientierungspunkte, um die bevorzugte Sensoreinstellung anzupassen und eine finale Sensoreinstellung zu erhalten. Die Orientierungspunkte können auch im Falle einer manuellen Feinjustierung vom Benutzer dazu verwendet werden, die finale Sensoreinstellung zu ermitteln. Beispielsweise können die Orientierungspunkte in der Sensorkonfigurationsapplikation graphisch visualisiert werden, um die Feinjustierung des realen Sensors zu erleichtern und das Benutzererlebnis zu verbessern.

Gemäß einer weiteren Ausführungsform werden einem Benutzer der Sensorkonfigurationsapplikation basierend auf der bevorzugten Sensoreinstellung und den Informationen zu den Orientierungspunkten Vorschläge zur Änderung der Sensoreinstellung unterbreitet. Wie bereits vorstehend beschrieben, können die Orientierungspunkte zur Anpassung der Position und/oder Ausrichtung des realen Sensors verwendet werden. Die Sensorkonfigurationsapplikation kann beispielsweise, wie vorstehend beschrieben, basierend auf den Orientierungspunkten eine aktuelle Sensoreinstellung des realen Sensors ermitteln und mit der bevorzugten Sensoreinstellung vergleichen. Basierend auf der Abweichung der aktuellen Sensoreinstellung des realen Sensors von der bevorzugten Sensoreinstellung kann die Sensorkonfigurationsapplikation dem Benutzer anschließend Vorschläge zur Änderung der Sensoreinstellung unterbreiten. Der Benutzer hat beispielsweise die Möglichkeit, die Vorschläge zur Änderung der Sensoreinstellung mittels eines Annahmebefehls anzunehmen, so dass die Sensorkonfigurationsapplikation die Änderung der Sensoreinstellung in Reaktion auf den Annahmebefehl durchführt, um die finale Sensoreinstellung zu erhalten. Alternativ kann der Benutzer die Vorschläge zur Änderung der Sensoreinstellung auch manuell durchführen. Beispielsweise kann der Benutzer über ein geeignetes Benutzerinterface der Sensorkonfigurationsapplikation eine entsprechende Anpassung der Sensoreinstellung vornehmen. Über das Benutzerinterface können beispielsweise vom Benutzer Änderungen der Sensoreinstellung, d.h. der Sensorposition, Sensorausrichtung und/oder der Sensorparameter, vorgenommen werden. Insbesondere kann der Benutzer über das Benutzerinterface die Werte für die vorstehend genannten Parameter manipulieren bzw. verändern.

Gemäß einer weiteren Ausführungsform sind in der virtuellen Testumgebung weitere virtuelle Sensoren vorgesehen, wobei in die Evaluierungsmetrik

Erfassungsbereiche der weiteren virtuellen Sensoren eingebracht werden. Die Erfassungsbereiche der weiteren virtuellen Sensoren werden somit in der Evaluierungsmetrik berücksichtigt. Mit anderen Worten erfolgt die Ermittlung der bevorzugten Sensoreinstellung abhängig von den weiteren virtuellen Sensoren bzw. von den Erfassungsbereichen der weiteren virtuellen Sensoren. Die bevorzugte Sensoreinstellung ist somit nicht statisch, sondern kann sich dynamisch abhängig von den Erfassungsbereichen der weiteren virtuellen Sensoren verändern. Diese Abhängigkeit kann in der Evaluierungsmetrik implementiert sein. Beispielsweise kann die Evaluierungsmetrik ein Maß dafür darstellen, inwiefern ein vorgegebener Bereich bzw. Raum mit einer vorgegebenen Anzahl an Sensoren erfasst wird. Insbesondere kann die Evaluierungsmetrik angeben, ob der vorgegebene Bereich von den Erfassungsbereichen der virtuellen Sensoren, insbesondere in Kombination, vollständig abgedeckt wird. Auch im Falle einer Multi-Sensor-Anordnung kann somit eine bevorzugte Sensoreinstellung ermittelt werden.

Gemäß einer weiteren Ausführungsform werden die virtuelle Testumgebung, der virtuelle Sensor und/oder die weiteren virtuellen Sensoren auf einer Anzeige visualisiert, wobei auf der Anzeige der Erfassungsbereich des virtuellen Sensors und/oder die Erfassungsbereiche der weiteren virtuellen Sensoren und/oder eine Überschneidung des Erfassungsbereichs des virtuellen Sensors und/oder der Erfassungsbereiche der weiteren virtuellen Sensoren und/oder nicht erfasste Bereiche auf der Anzeige visuell, insbesondere farbig, hervorgehoben werden. Beispielsweise können die jeweiligen Erfassungsbereiche in unterschiedlichen Farben dargestellt werden. Überschneidungen der jeweiligen Erfassungsbereiche und/oder nicht erfasste Bereiche können ferner in einer einheitlichen, eindeutigen Farbe dargestellt werden, so dass der Benutzer diese Bereiche direkt auf der Anzeige erkennt und identifizieren kann. Durch eine Visualisierung der jeweiligen Bereiche auf der Anzeige kann der Benutzer die Sensoreinstellung des virtuellen Sensors derart anpassen, dass die einzelnen Erfassungsbereiche der unterschiedlichen virtuellen Sensoren, d.h. des virtuellen Sensors und der weiteren virtuellen Sensoren, aufeinander abgestimmt sind. Beispielsweise kann der Benutzer die Sensoreinstellung des virtuellen Sensors so anpassen, dass ein vorgegebener Bereich durch die Erfassungsbereiche aller vorhandenen virtuellen Sensoren, insbesondere vollständig oder zumindest zu einem größtmöglichen Teil, abgedeckt ist. Durch die Visualisierung der jeweiligen Erfassungsbereiche auf der Anzeige wird dem Nutzer die Ermittlung der bevorzugten Sensoreinstellung, die insbesondere die vorstehende Bedingung erfüllt, erleichtert. Insofern kann die Anzeige als ein Teil der Sensorkonfigurationsapplikation ausgebildet sein.

Gemäß einer weiteren Ausführungsform wird eine Mehrzahl von, insbesondere unterschiedlichen, Sensoreinstellungen des virtuellen Sensors als bevorzugte Sensoreinstellungen ausgegeben, wobei eine jeweilige bevorzugte Sensoreinstellung einem zugehörigen Anwendungsbereich und/oder einer zugehörigen Witterungsbedingung zugeordnet ist. Die Anforderungen an einen Sensor können beispielsweise für unterschiedliche Anwendungsbereiche und/oder Witterungsbedingungen voneinander abweichen. Beispielsweise kann für eine Short-Range-Anwendung ein steilere Modulationsrampe bei der Modulation des Laserstrahls notwendig sein als für eine Long-Range-Anwendung. Insbesondere kann die gewünschte Sensoreinstellung abhängig vom Ort, Zweck, vorgegebenem Messdistanzbereich, Wetter, beispielsweise den Sichtverhältnissen, und/oder anderen Faktoren variieren. Entsprechend können für die unterschiedlichen Gegebenheiten unterschiedliche optimale bzw. bevorzugte Sensoreinstellungen vorgesehen sein.

Beispielsweise können bei einer Aircraft-Docking-Applikation, bei der ein Flugzeug nach einer Landung in eine vordefinierte Position gebracht werden soll, abhängig vom Abstand des Flugzeugs zum Sensor bzw. zur Flugzeug-Stopp-Position unterschiedliche bevorzugte Sensoreinstellungen vorgesehen sein. Mittels des Simulationsmodells können die unterschiedlichen bevorzugten Sensoreinstellungen wie bereits vorstehend beschrieben, ermittelt und ausgegeben werden. Der reale Sensor kann anschließend im laufenden Betrieb, je nach Entfernung des Flugzeugs zum Sensor, zwischen jeweiligen bevorzugten Sensoreinstellungen wechseln. Um Flugzeuge bei einer großen Entfernung zu detektieren, kann beispielsweise eine Sensoreinstellung erforderlich sein, bei der das Field-of-View (FoV) reduziert ist, so dass die Messzeit pro Scanpunkt und/oder die Anzahl der Scanpunkte optimiert wird, um eine höhere Detektionswahrscheinlichkeit und Messperformance bereitzustellen. Insbesondere bei Umwelteinflüssen kann eine derartige Einstellung vorteilhaft sein. Wenn sich das Flugzeug in einer kleineren Entfernung zum Sensor befindet, kann beispielsweise ein größeres FoV erforderlich sein, um die Umgebung des Flugzeugs zu beobachten und zu erfassen und so die Flugzeugabfertigung bzw. die korrekte Positionierung des Flugzeugs an einer vorgesehenen Position zu vereinfachen und zu beschleunigen. Eine geringere Detektionswahrscheinlichkeit und eine zu erwartende schlechtere Messperformance können hierbei in Kauf genommen werden.

Wie in einer vorherigen Ausführungsform beschrieben, können auch weitere virtuelle Sensoren vorgesehen sein. In einem solchen Fall kann bevorzugte Sensoreinstellung von den Erfassungsbereichen der eingesetzten virtuellen Sensoren und/oder abhängig von der Anzahl der virtuellen Sensoren sein. Entsprechend kann in der realen Anwendung die Sensoreinstellung des realen Sensors flexibel an sich ändernde Gegebenheiten, d.h. Anwendungsbereiche und/oder Witterungsbedingungen, angepasst werden.

Gemäß einer weiteren Ausführungsform wird die Sensoreinstellung des realen Sensors unter Verwendung der Mehrzahl von bevorzugten Sensoreinstellungen und abhängig von dem Anwendungsbereich und/oder der Witterungsbedingung automatisch angepasst. Beispielsweise wird die Sensoreinstellung des realen Sensors basierend auf den erfassten Sensordaten automatisch angepasst, wenn die Sensordaten anzeigen, dass eine andere bevorzugte Sensoreinstellung für die vorliegenden Gegebenheiten vorgesehen ist. Beispielsweise können die Sensordaten unterschiedliche Parameter und zugehörige Parameterwerte umfassen. Die Sensordaten können beispielsweise eine gemessene Entfernung zu einem Objekt, eine Signalstärke des empfangenen, reflektierten Signals und/oder andere geeignete Parameter umfassen. Ein Wertebereich für einen Parameter und/oder eine Kombination von Wertebereichen der unterschiedlichen Parameter können beispielsweise einer jeweiligen bevorzugten Sensoreinstellung zugeordnet sein. Wenn die Sensordaten anzeigen, dass ein Parameter und/oder mehrere Parameter in jeweils vorgegebenen Wertebereichen liegen, kann somit eine zugehörige bevorzugte Sensoreinstellung automatisch für den realen Sensor ausgewählt werden. Eine gemessene Entfernung zu einem Objekt kann z.B. einem vordefinierten Messdistanzbereich zugeordnet werden, welcher beispielsweise einer der Mehrzahl der bevorzugten Sensoreinstellungen zugeordnet ist.

Ein weiterer Aspekt der Erfindung betrifft ein System zur Bestimmung einer Einstellung eines Sensors, umfassend:

einen realen Sensor und eine Simulationseinrichtung, die dazu ausgebildet ist:

(1) ein Simulationsmodell zu definieren, das eine virtuelle Testumgebung und zumindest einen virtuellen Sensor umfasst;

(2) in der virtuellen Testumgebung der virtuelle Sensor mit einer Sensoreinstellung zu initialisieren, wobei die Sensoreinstellung eine Sensorposition, eine Sensorausrichtung und/oder zumindest einen Sensorparameter umfasst;

(3) von dem virtuellen Sensor erzeugte virtuelle Sensordaten, die der Sensoreinstellung zugeordnet sind, basierend auf zumindest einer Evaluierungsmetrik zu evaluieren, wobei in die jeweilige Evaluierungsmetrik ein Erfassungsbereich des virtuellen Sensors eingeht, wobei die Evaluierung der Sensordaten umfasst, dass:

(4) festgestellt wird, ob die Evaluierungsmetrik zumindest eine vorgegebene Bedingung erfüllt;

(5) bei einer negativen Feststellung die Sensoreinstellung des virtuellen Sensors, angepasst wird und die der angepassten Sensoreinstellung zugehörigen virtuellen Sensordaten gemäß (3) evaluiert werden;

(6) bei einer positiven Feststellung die Sensoreinstellung als bevorzugte Sensoreinstellung ausgegeben wird; und

(7) die bevorzugte Sensoreinstellung an den realen Sensor zu übermitteln, wobei das System ausgebildet ist, den realen Sensor basierend auf der bevorzugten Sensoreinstellung zu konfigurieren.

Für das System gelten die Ausführungen zu dem erfindungsgemäßen Verfahren entsprechend. Dies gilt insbesondere hinsichtlich Vorteilen und Ausführungsformen.

Es ist zu beachten, dass jede Kombination der vorstehenden und nachstehenden Ausführungsformen möglich ist, wenn dies nicht explizit ausgeschlossen wurde.

Nachfolgend wird die Erfindung rein beispielhaft unter Bezugnahme auf die Zeichnung darstellt. Es zeigen:

Fig. 1  schematisch ein System zur Bestimmung einer Einstellung eines Sensors;

Fig. 2A und 2B  eine zweidimensionale Darstellung eines virtuellen Sensors in einer virtuellen Testumgebung mit einer ersten und einer zweiten Sensoreinstellung;

Fig. 3A  eine zweidimensionale Darstellung eines virtuellen Sensors mit einer ersten Sensoreinstellung und eines weiteren virtuellen Sensors;

Fig. 3B  eine zweidimensionale Darstellung des virtuellen Sensors mit einer zweiten Sensoreinstellung und eines weiteren virtuellen Sensors; und

Fig. 4A, 4B und 4C  Visualisierungen der virtuellen Sensordaten und der virtuellen Testumgebung auf einer Anzeige der Simulationseinrichtung.

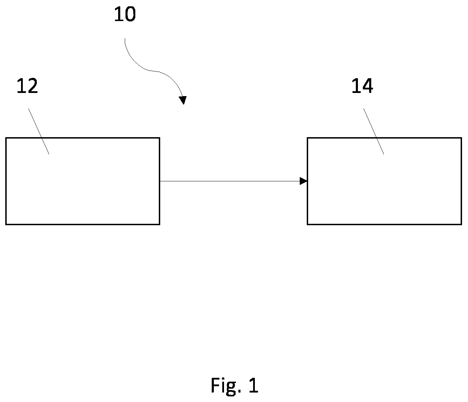

Fig. 1 zeigt ein System 10 zur Bestimmung einer Einstellung eines Sensors, welches eine Simulationseinrichtung 12, beispielsweise eine Recheneinrichtung, und einen realen Sensor 14 umfasst. Die Simulationseinrichtung 12 ist dazu ausgebildet, ein Simulationsmodell zu definieren, das eine virtuelle Testumgebung 18 und zumindest einen virtuellen Sensor 16 umfasst. Der virtuelle Sensor 16 wird in der virtuellen Testumgebung 18 mit einer Sensoreinstellung initialisiert, wobei die Sensoreinstellung eine Sensorposition, eine Sensorausrichtung und/oder zumindest einen Sensorparameter umfasst. Von dem virtuellen Sensor 16 erzeugte virtuelle Sensordaten, die der Sensoreinstellung zugeordnet sind, werden basierend auf zumindest einer Evaluierungsmetrik evaluiert, wobei in die Evaluierungsmetrik ein Erfassungsbereich des virtuellen Sensors 16 eingeht. Die Evaluierung der Sensordaten umfasst dabei, dass festgestellt wird, ob die Evaluierungsmetrik zumindest eine vorgegebene Bedingung erfüllt, bei einer negativen Feststellung die Sensoreinstellung des virtuellen Sensors 16, beispielsweise unter Verwendung eines Optimierungsverfahrens angepasst wird und die der angepassten Sensoreinstellung zugehörigen virtuellen Sensordaten evaluiert werden und bei einer positiven Feststellung die Sensoreinstellung als bevorzugte Sensoreinstellung von der Simulationseinrichtung 12 ausgegeben und an den realen Sensor 14 übermittelt wird, wobei das System 10 ausgebildet ist, den realen Sensor 14 basierend auf der bevorzugten Sensoreinstellung zu konfigurieren, d.h. eine vorliegende Sensoreinstellung des realen Sensors 14 mit der bevorzugten Sensoreinstellung zu überschreiben. Dadurch wird beispielsweise die Position, Ausrichtung und/oder zumindest ein Sensorparameter des realen Sensors 14 verändert.

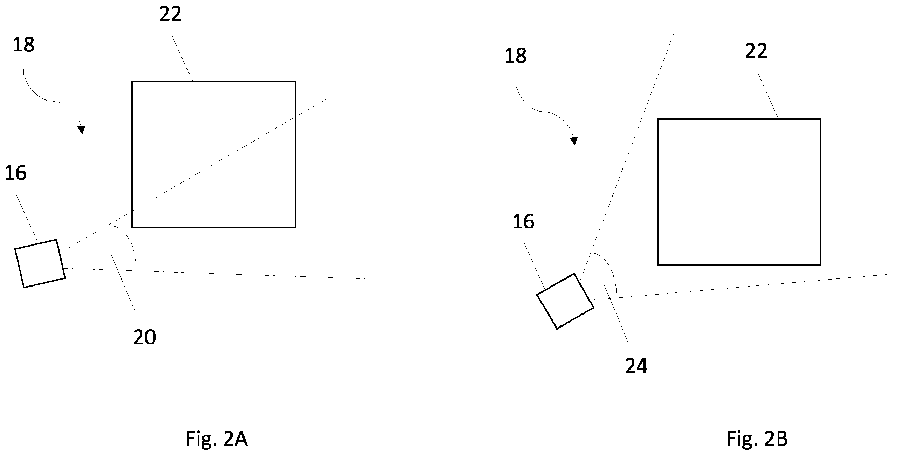

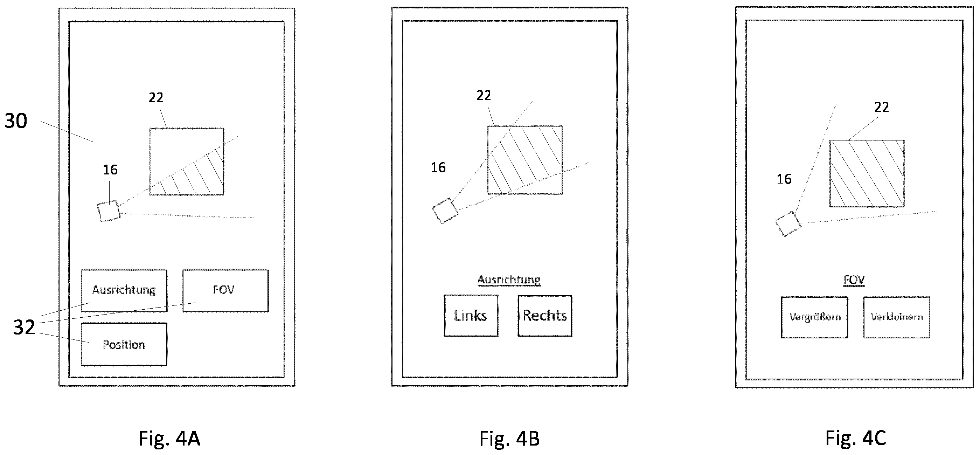

In Fig. 2A und 2B ist eine Anpassung der Sensoreinstellung des virtuellen Sensors 16 in der virtuellen Testumgebung 18 in 2D visualisiert. Fig. 2A zeigt den virtuellen Sensor 16, der eine erste Sensoreinstellung aufweist, d.h. eine erste Sensorposition, eine erste Sensorausrichtung und ein erstes FoV 20, d.h. Sichtbereich, des virtuellen Sensors 16. Der virtuelle Sensor 16 wird beispielsweise in der virtuellen Testumgebung 18 mit der ersten Sensoreinstellung initialisiert. Grundsätzlich kann die Sensoreinstellung noch weitere als die hier erwähnten Parameter umfassen. Ferner ist ein vorgegebener Bereich 22 zu sehen, welcher teilweise von dem Erfassungsbereich des virtuellen Sensors 16 erfasst bzw. abgedeckt wird. Der vorgegebene Bereich 22 stellt beispielsweise einen zu erfassenden Bereich dar, welcher durch den Erfassungsbereich des virtuellen Sensors 16 abgedeckt werden soll. Die von dem virtuellen Sensor 16 erzeugten virtuellen Sensordaten, welche basierend auf der ersten Sensoreinstellung erzeugt wurden, können anschließend evaluiert werden, um festzustellen, ob der vorgegebene Bereich 22 durch den Erfassungsbereich des virtuellen Sensors 16 abgedeckt ist. Die Evaluierung der Sensordaten erfolgt dabei automatisch, indem eine Evaluierungsmetrik verwendet wird, welche beispielsweise anzeigt, wieviel Prozent des vorgegebenen Bereichs 22 nicht durch den Erfassungsbereich des virtuellen Sensors 16 abgedeckt ist. Die Sensoreinstellung des virtuellen Sensors 16 wird somit so lange angepasst, bis 100% des vorgegebenen Bereichs 22 durch den Erfassungsbereich des virtuellen Sensors 16 abgedeckt sind. Alternativ kann die Evaluierung der virtuellen Sensordaten auch manuell erfolgen, indem beispielsweise eine der Fig. 2A ähnlichen Darstellung auf einer Anzeige für einen Benutzer visualisiert wird, so dass der Benutzer die Sensoreinstellung derart anpassen kann, dass der vorgegebene Bereich 22 vollständig durch den Erfassungsbereich des virtuellen Sensors 16 abgedeckt ist. Eine entsprechende Illustrierung ist in den Fig. 4A bis 4C gezeigt.

Fig. 2B zeigt den virtuellen Sensor 16 mit einer zweiten, angepassten Sensoreinstellung, d.h. mit einer zweiten Sensorposition, einer zweiten Sensorausrichtung und einem zweiten FoV 24. Die erste Sensoreinstellung wurde dabei derart angepasst, dass die vorgegebene Bedingung erfüllt ist. Wie aus Fig. 2B ersichtlich ist, hat sich die Ausrichtung des virtuellen Sensors 16 sowie das FoV verändert. Eine Änderung der Position des virtuellen Sensors 16 ist jedoch nicht zu erkennen, da eine Positionsänderung nicht notwendig ist, um den vorgegebenen Bereich 22 durch den Erfassungsbereich des virtuellen Sensors 16 abzudecken. Die angepasste, zweite Sensoreinstellung kann insbesondere iterativ ermittelt werden, indem die Sensoreinstellung ausgehend von der initialen, ersten Sensoreinstellung fortlaufend geändert wird, bis eine Sensoreinstellung gefunden wird, bei der der vorgegebene Bereich 22 vollständig von dem Erfassungsbereich des virtuellen Sensors 16 abgedeckt wird.

Die ermittelte zweite Sensoreinstellung wird anschließend an den realen Sensor 14 als bevorzugte Sensoreinstellung übermittelt und dazu verwendet, um den realen Sensor 14 zu konfigurieren, d.h. die Sensoreinstellung des realen Sensors 14 mit der bevorzugten Sensoreinstellung zu initialisieren oder anzupassen.

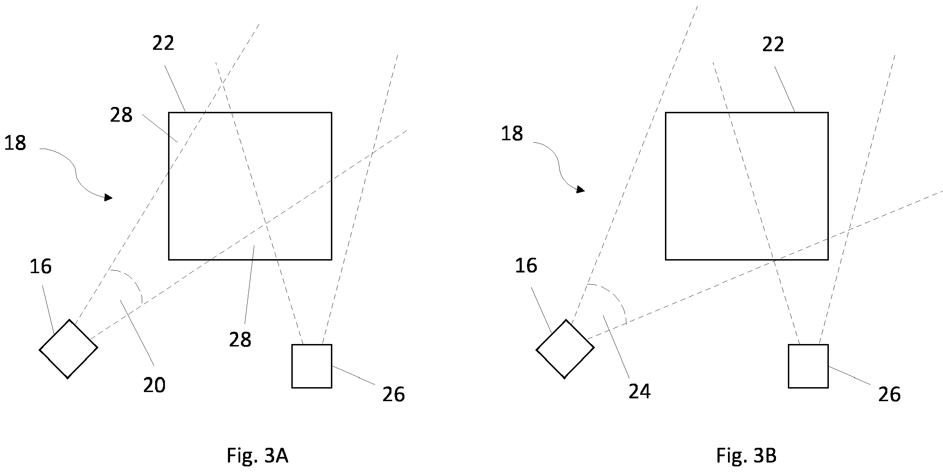

Fig. 3A und 3B zeigen eine der Fig. 2A und 2B ähnliche Darstellung. Die Fig. 3A und 3B unterscheiden sich jedoch von Fig. 2A und 2B dahingehend, dass ein weiterer virtueller Sensor 26 in der virtuellen Testumgebung 18 vorgesehen ist. Der vorgegebene Bereich 22 wird somit nicht nur von einem virtuellen Sensor erfasst bzw. abgedeckt, sondern von zwei virtuellen Sensoren. In einem solchen Fall kann die Sensoreinstellung des virtuellen Sensors 16 derart angepasst werden, dass der vorgegebene Bereich 22 durch die, insbesondere kombinierten, Erfassungsbereiche des virtuellen Sensors 16 und des weiteren virtuellen Sensors 26 abgedeckt wird.

Wie in Fig. 3A gezeigt, wird durch den Erfassungsbereich des virtuellen Sensors 16, der mit der ersten Sensoreinstellung initialisiert wurde, und den Erfassungsbereich des weiteren virtuellen Sensors 26 der vorgegebene Bereich 22 nicht vollständig abgedeckt. Vielmehr existieren zwei unerfasste Teilbereiche 28 des vorgegebenen Bereichs 22, die durch die kombinierten Erfassungsbereiche des virtuellen Sensors 16 und des weiteren virtuellen Sensors 26 nicht abgedeckt werden. Wie bereits zu Fig. 2A und 2B beschrieben, werden die von dem virtuellen Sensor 16 erfolgten virtuellen Sensordaten, die der ersten Sensoreinstellung zugeordnet sind, evaluiert, um festzustellen, wieviel Prozent des vorgegebenen Bereichs 22 nicht erfasst werden bzw. ob unerfasste Teilbereiche 28 existieren. Im Unterschied zur Fig. 2 werden bei der Evaluierung der virtuellen Sensordaten des virtuellen Sensors 16 zusätzlich auch die virtuellen Sensordaten des weiteren virtuellen Sensors 26 berücksichtigt. Somit kann festgestellt werden, ob die kombinierten Erfassungsbereiche des virtuellen Sensors 16 und des weiteren virtuellen Sensors 26 den vorgegebenen Bereich 22 abdecken. Wie in Fig. 3A ersichtlich, ist dies nicht der Fall. Folglich wird die Sensoreinstellung des virtuellen Sensors 16 angepasst, so dass eine zweite Sensoreinstellung gefunden wird. Wie in Fig. 3B gezeigt, umfasst die zweite Sensoreinstellung ein zweites FoV 24. Eine Änderung der Position und Ausrichtung des virtuellen Sensors 16 ist in dem vorliegenden Fall nicht notwendig. Wie in Fig. 3B dargestellt, wird der vorgegebene Bereich 22 mit der zweiten Sensoreinstellung vollständig durch die kombinierten Erfassungsbereiche des virtuellen Sensors 16 und des weiteren virtuellen Sensors 26 abgedeckt. Es ist zu beachten, dass der vorgegebene Bereich 22 durch den Erfassungsbereich des virtuellen Sensors 16 für sich genommen nicht abgedeckt wird, sondern erst in Kombination mit dem Erfassungsbereich des weiteren virtuellen Sensors 26. Die ermittelte zweite Sensoreinstellung kann anschließend zur Konfiguration des realen Sensors 14 in einer realen Anwendung verwendet werden, bei der beispielsweise ein weiterer realer Sensor in einer dem weiteren virtuellen Sensor entsprechenden Position angeordnet ist.

Fig. 4A, 4B und 4C zeigen eine der Fig. 2A ähnlichen Darstellung des virtuellen Sensors 16 und der virtuellen Testumgebung 18 auf einer Anzeige 30 der Simulationseinrichtung 12. Insbesondere werden die Überschneidungen des Erfassungsbereichs des virtuellen Sensors 16 und des vorgegebenen Bereichs 22 auf der Anzeige 30 schraffiert dargestellt. Zusätzlich oder alternativ können die Überschneidungen farbig oder mittels anderer geeigneter Techniken hervorgehoben werden. Auf der Anzeige 30 der Simulationseinrichtung 12 werden dem Benutzer Auswahloptionen 32 angezeigt, um die Sensoreinstellung anzupassen. Die Auswahloptionen 32 umfassen hierbei die Optionen zur Änderung einer Ausrichtung, einer Position und eines FoVs, wie in Fig. 4A gezeigt. Durch Auswählen einer entsprechenden Option gelangt der Nutzer zu einer Ansicht wie sie beispielsweise in Fig. 4B und 4C gezeigt ist, um einen jeweiligen Sensoreinstellungsparameter anzupassen. Bei der Anzeige 30 handelt es sich um ein Touch-Display, so dass der Nutzer die geeignete Option direkt über das Display auswählen kann.

In Fig. 4B ist die auf der Anzeige 30 zu sehende Darstellung nach Auswahl der Option "Ausrichtung" gezeigt. Der Benutzer kann in dieser Einstellungsoption die Ausrichtung des virtuellen Sensors 16 durch Betätigung des jeweiligen Buttons nach links oder rechts anpassen. Grundsätzlich kann eine Anpassung der Ausrichtung in jede vorstellbare Richtung erfolgen. Beispielsweise kann bei einer dreidimensionalen Darstellung der Sensordaten eine Änderung der Ausrichtung nach oben, nach unten oder in jede andere beliebige Richtung erfolgen. Wie in Fig. 4B ersichtlich ist, wurde die Ausrichtung des virtuellen Sensors 16 durch den Nutzer nach links angepasst, so dass ein größerer Teilbereich des vorgegebenen Bereichs 22 durch den Erfassungsbereich des virtuellen Sensors 16 abgedeckt ist. Trotz der Anpassung der Ausrichtung existieren jedoch weiterhin unerfasste Teilbereiche 28 des vorgegebenen Bereichs 22.

Um auch die unerfassten Teilbereiche 28 des vorgegebenen Bereichs 22 durch den Erfassungsbereich des virtuellen Sensors 16 abzudecken, kann der Benutzer in einem abschließenden Schritt das FoV anpassen. Das FoV des virtuellen Sensors stellt den Sichtbereich des Sensors dar, d.h. den Erfassungswinkel, welcher beispielsweise durch ein Scanmuster eines Laserscanners festgelegt wird. Beispielsweise kann der Nutzer die Auswahloption "FoV" wählen, mit der er die FoV vergrößern oder verkleinern kann. In Fig. 4C ist die Anzeige 30 nach einer derartigen Anpassung gezeigt. Wie in Fig. 4C ersichtlich, hat der Nutzer das FoV derart vergrößert, dass der vorgegebene Bereich 22 vollständig durch den Erfassungsbereich des virtuellen Sensors 16 abgedeckt ist. Das hiermit ermittelte FoV kann somit als bevorzugter Sensoreinstellungsparameter festgelegt und gespeichert werden. In der realen Anwendung kann der reale Sensor anschließend basierend auf diesem ermittelten FoV konfiguriert werden, indem der Scanbereich des realen Sensors entsprechend angepasst wird.

Die hier beschriebene schrittweise Anpassung der Sensoreinstellung kann auch automatisch durch einen Algorithmus durchgeführt werden. In einem solchen Fall kann die schrittweise Anpassung der Sensoreinstellung weiterhin auf der Anzeige 30 der Simulationseinrichtung 12 dem Nutzer angezeigt werden, um den Anpassungsprozess visuell für den Benutzer zu veranschaulichen.

**Bezugszeichenliste**

| | |
|---|---|
| 10 | System |
| 12 | Simulationseinrichtung |
| 14 | realer Sensor |
| 16 | virtueller Sensor |
| 18 | virtuelle Testumgebung |
| 20 | erstes FoV |
| 22 | vorgegebener Bereich |
| 24 | zweites FoV |
| 26 | weiterer virtueller Sensor |
| 28 | unerfasste Teilbereiche |
| 30 | Anzeige |
| 32 | Auswahloptionen |

**Patentansprüche**

1.  Verfahren zur Bestimmung einer Einstellung eines Sensors, wobei das Verfahren mittels einer Recheneinrichtung ausgeführt wird und umfasst, dass:

    (1) ein Simulationsmodell definiert wird, das eine virtuelle Testumgebung (18) und zumindest einen virtuellen Sensor (16) umfasst;
    (2) in der virtuellen Testumgebung (18) der virtuelle Sensor (16) mit einer Sensoreinstellung initialisiert wird, wobei die Sensoreinstellung eine Sensorposition, eine Sensorausrichtung und/oder zumindest einen Sensorparameter umfasst;
    (3) von dem virtuellen Sensor (16) erzeugte virtuelle Sensordaten, die der Sensoreinstellung zugeordnet sind, basierend auf zumindest einer Evaluierungsmetrik evaluiert werden, wobei in die Evaluierungsmetrik ein Erfassungsbereich des virtuellen Sensors (16) eingeht, wobei die Evaluierung der Sensordaten umfasst, dass:
    (4) festgestellt wird, ob die Evaluierungsmetrik zumindest eine vorgebebene Bedingung erfüllt;
    (5) bei einer negativen Feststellung die Sensoreinstellung des virtuellen Sensors (16), angepasst wird und die der angepassten Sensoreinstellung zugehörigen virtuellen Sensordaten gemäß (3) evaluiert werden;
    (6) bei einer positiven Feststellung die Sensoreinstellung als bevorzugte Sensoreinstellung von der Recheneinrichtung ausgegeben wird; und
    (7) ein realer Sensor (14) in einer realen Anwendung basierend auf der bevorzugten Sensoreinstellung konfiguriert wird,

**dadurch gekennzeichnet, dass**
die Evaluierungsmetrik einen Optimierungsfunktionswert umfasst, wobei der Optimierungsfunktionswert mittels einer Optimierungsfunktion und basierend auf den virtuellen Sensordaten berechnet wird, wobei die vorgegebene Bedingung umfasst, dass der Optimierungsfunktionswert einem im Wesentlichen minimalen Wert oder einen im Wesentlichen maximalen Wert der Optimierungsfunktion entspricht.

2. Verfahren nach Anspruch 1,
   wobei die Evaluierung der Sensordaten automatisch erfolgt.

3. Verfahren nach einem der vorstehenden Ansprüche,
   wobei die Evaluierungsmetrik auf einem Vergleich zwischen einem Erfassungsbereich des virtuellen Sensors (16) und einem vorgegebenen Bereich (22) in der virtuellen Testumgebung (18) beruht.

4. Verfahren nach einem der vorstehenden Ansprüche,
   wobei in die Evaluierungsmetrik ein vorgebebener Messdistanzbereich des virtuellen Sensors (16) eingeht, wobei der vorgebebene Messdistanzbereich einen Bereich festlegt, in welchem der virtuelle Sensor plausible Messwerte erzeugt.

5. Verfahren nach einem der vorstehenden Ansprüche,
   wobei die Sensordaten Informationen zu Orientierungspunkten umfassen, wobei die Orientierungspunkte zumindest einem festen Ortspunkt in der virtuellen Testumgebung zugeordnet sind, wobei basierend auf den Orientierungspunkten und den Sensordaten des realen Sensors (14) eine Konfiguration der Sensoreinstellung des realen Sensors (14) in der realen Anwendung erfolgt.

6. Verfahren nach einem der vorstehenden Ansprüche,
   wobei basierend auf den Orientierungspunkten die Position und/oder Ausrichtung des realen Sensors (14) ermittelt wird.

7. Verfahren nach einem der vorstehenden Ansprüche,
   wobei der reale Sensor (14) mit einer Sensorkonfigurationsapplikation in Verbindung steht, wobei mittels der Sensorkonfigurationsapplikation die Sensoreinstellung des realen Sensors (14) basierend auf der bevorzugten Sensoreinstellung konfiguriert wird.

8. Verfahren nach einem der vorstehenden Ansprüche,
   wobei eine finale Sensoreinstellung des realen Sensors (14) basierend auf der bevorzugten Sensoreinstellung und den Informationen zu den Orientierungspunkten manuell oder automatisch ermittelt wird.

9. Verfahren nach einem der vorstehenden Ansprüche,
   wobei einem Benutzer der Sensorkonfigurationsapplikation basierend auf der bevorzugten Sensoreinstellung und den Informationen zu den Orientierungspunkten Vorschläge zur Änderung der Sensoreinstellung unterbreitet werden.

10. Verfahren nach einem der vorstehenden Ansprüche,
    wobei in der virtuellen Testumgebung (18) weitere virtuelle Sensoren (26) vorgesehen sind, wobei in die Evaluierungsmetrik ein Erfassungsbereich der weiteren virtuellen Sensoren (26) eingebracht wird.

11. Verfahren nach einem der vorstehenden Ansprüche,
    wobei die virtuelle Testumgebung (18), der virtuelle Sensor (16) und/oder die weiteren virtuellen Sensoren (26) auf einer Anzeige (30) visualisiert werden, wobei auf der Anzeige (30) der Erfassungsbereich des virtuellen Sensors (16) und/oder die Erfassungsbereiche der weiteren virtuellen Sensoren (26) und/oder eine Überschneidung des Erfassungsbereichs des virtuellen Sensors (16) und/oder der Erfassungsbereiche der weiteren virtuellen Sensoren (26) und/oder unerfasste Bereiche (28) auf der Anzeige visuell, insbesondere farbig, hervorgehoben werden.

12. Verfahren nach einem der vorstehenden Ansprüche,
    wobei eine Mehrzahl von, insbesondere unterschiedlichen, Sensoreinstellungen des virtuellen Sensors (16) als bevorzugte Sensoreinstellungen ausgegeben wird, wobei eine jeweilige bevorzugte Sensoreinstellung einem zugehörigen Anwendungsbereich und/oder einer zugehörigen Witterungsbedingung zugeordnet ist.

13. Verfahren nach Anspruch 12,
wobei die Sensoreinstellung des realen Sensors (14) unter Verwendung der Mehrzahl von bevorzugten Sensoreinstellungen und abhängig von dem Anwendungsbereich und/oder Witterungsbedingung automatisch anpasst wird.

14. System (10) zur Bestimmung einer Einstellung eines Sensors, umfassend: einen realen Sensor (14) und eine Simulationseinrichtung (12), die dazu ausgebildet ist:

(1) ein Simulationsmodell zu definieren, das eine virtuelle Testumgebung (18) und zumindest einen virtuellen Sensor (16) umfasst;
(2) in der virtuellen Testumgebung (18) den virtuellen Sensor (16) mit einer Sensoreinstellung zu initialisieren, wobei die Sensoreinstellung eine Sensorposition, eine Sensorausrichtung und/oder zumindest einen Sensorparameter umfasst;
(3) von dem virtuellen Sensor (16) erzeugte virtuelle Sensordaten, die der Sensoreinstellung zugeordnet sind, basierend auf zumindest einer Evaluierungsmetrik zu evaluieren, wobei in die Evaluierungsmetrik ein Erfassungsbereich des virtuellen Sensors (16) eingeht, wobei die Evaluierung der Sensordaten umfasst, dass:
(4) festgestellt wird, ob die Evaluierungsmetrik zumindest eine vorgebebene Bedingung erfüllt;
(5) bei einer negativen Feststellung die Sensoreinstellung des virtuellen Sensors (16), angepasst wird und die der angepassten Sensoreinstellung zugehörigen virtuellen Sensordaten gemäß (3) evaluiert werden;
(6) bei einer positiven Feststellung die Sensoreinstellung als bevorzugte Sensoreinstellung ausgegeben wird; und
(7) die bevorzugte Sensoreinstellung an den realen Sensor (14) zu übermitteln, wobei das System (10) ausgebildet ist, den realen Sensor (14) basierend auf der bevorzugten Sensoreinstellung zu konfigurieren,

**dadurch gekennzeichnet, dass**
die Evaluierungsmetrik einen Optimierungsfunktionswert umfasst, wobei der Optimierungsfunktionswert mittels einer Optimierungsfunktion und basierend auf den virtuellen Sensordaten berechnet wird, wobei die vorgegebene Bedingung umfasst, dass der Optimierungsfunktionswert einem im Wesentlichen minimalen Wert oder einen im Wesentlichen maximalen Wert der Optimierungsfunktion entspricht.

## Claims

1. A method for determining a setting of a sensor, wherein the method is performed by means of a computing device and comprises that:

(1) a simulation model is defined that comprises a virtual test environment (18) and at least one virtual sensor (16);
(2) in the virtual test environment (18), the virtual sensor (16) is initialized with a sensor setting, wherein the sensor setting comprises a sensor position, a sensor orientation and/or at least one sensor parameter;
(3) virtual sensor data generated by the virtual sensor (16) and associated with the sensor setting are evaluated based on at least one evaluation metric, wherein a detection zone of the virtual sensor (16) is included the evaluation metric, wherein the evaluation of the sensor data comprises that:
(4) it is determined whether the evaluation metric fulfills at least one predefined condition;
(5) in the event of a negative determination, the sensor setting of the virtual sensor (16) is adjusted and the virtual sensor data associated with the adjusted sensor setting are evaluated in accordance with (3);
(6) in the event of a positive determination, the sensor setting is output by the computing device as the preferred sensor setting; and
(7) a real sensor (14) is configured in a real application based on the preferred sensor setting,

**characterized in that**
the evaluation metric comprises an optimization function value, with the optimization function value being calculated by means of an optimization function and based on the virtual sensor data, with the predefined condition comprising that the optimization function value corresponds to a substantially minimum value or a substantially maximum value of the optimization function.

2. A method according to claim 1,
wherein the evaluation of the sensor data takes place automatically.

3. A method according to one of the preceding claims,
wherein the evaluation metric is based on a comparison between a detection zone of the virtual sensor (16) and a predefined zone (22) in the virtual test environment (18).

4. A method according to any one of the preceding claims,
wherein a predefined measurement distance range of the virtual sensor (16) is included in the evaluation metric, wherein the predefined measurement distance range defines a range in which the virtual sensor generates plausible measurement values.

5. A method according to any one of the preceding claims,
wherein the sensor data comprise information on orientation points, wherein the orientation points are associated with at least one fixed location point in the virtual test environment, wherein a configuration of the sensor setting of the real sensor (14) in the real application takes place based on the orientation points and the sensor data of the real sensor (14).

6. A method according to any one of the preceding claims,
wherein the position and/or orientation of the real sensor (14) is/are determined based on the orientation points.

7. A method according to any one of the preceding claims,
wherein the real sensor (14) is connected to a sensor configuration application, wherein the sensor setting of the real sensor (14) is configured based on the preferred sensor setting by means of the sensor configuration application.

8. A method according to any one of the preceding claims,
wherein a final sensor setting of the real sensor (14) is manually or automatically determined based on the preferred sensor setting and the information on the orientation points.

9. A method according to any one of the preceding claims,
wherein suggestions for changing the sensor setting are made to a user of the sensor configuration application based on the preferred sensor setting and the information on the orientation points.

10. A method according to any one of the preceding claims,
wherein further virtual sensors (26) are provided in the virtual test environment (18), wherein a detection zone of the further virtual sensors (26) is introduced into the evaluation metric.

11. A method according to any one of the preceding claims,
wherein the virtual test environment (18), the virtual sensor (16) and/or the further virtual sensors (26) are visualized on a display (30), wherein, on the display (30), the detection zone of the virtual sensor (16) and/or the detection zones of the further virtual sensors (26) and/or an overlap of the detection zone of the virtual sensor (16) and/or of the detection zones of the further virtual sensors (26), and/or undetected zones (28) are visually highlighted, in particular in color, on the display.

12. A method according to any one of the preceding claims,
wherein a plurality of, in particular different, sensor settings of the virtual sensor (16) are output as preferred sensor settings, wherein a respective preferred sensor setting is assigned to an associated application area and/or an associated weather condition.

13. A method according to claim 12,
wherein the sensor setting of the real sensor (14) is automatically adjusted using the plurality of preferred sensor settings and depending on the application area and/or weather condition.

14. A system (10) for determining a setting of a sensor, comprising:
a real sensor (14) and a simulation device (12) which is configured:

(1) to define a simulation model that comprises a virtual test environment (18) and at least one virtual sensor (16);
(2) in the virtual test environment (18), to initialize the virtual sensor (16) with a sensor setting, wherein the sensor setting comprises a sensor position, a sensor orientation and/or at least one sensor parameter;
(3) to evaluate virtual sensor data, which are generated by the virtual sensor (16) and associated with the sensor setting, based on at least one evaluation metric, wherein a detection zone of the virtual sensor (16) is included the evaluation metric, wherein the evaluation of the sensor data comprises that:

(4) it is determined whether the evaluation metric fulfills at least one predefined condition;

(5) in the event of a negative determination, the sensor setting of the virtual sensor (16) is adjusted and the virtual sensor data associated with the adjusted sensor setting are evaluated in accordance with (3);

(6) in the event of a positive determination, the sensor setting is output as the preferred sensor setting; and

(7) to transmit the preferred sensor setting to the real sensor (14), wherein the system (10) is configured to configure the real sensor (14) based on the preferred sensor setting,

**characterized in that**

the evaluation metric comprises an optimization function value, with the optimization function value being calculated by means of an optimization function and based on the virtual sensor data, with the predefined condition comprising that the optimization function value corresponds to a substantially minimum value or a substantially maximum value of the optimization function.

**Revendications**

1. Procédé pour déterminer un réglage d'un capteur, le procédé étant exécuté au moyen d'un dispositif de calcul et comprenant les étapes suivantes :

(1) un modèle de simulation est défini, lequel comprend un environnement de test virtuel (18) et au moins un capteur virtuel (16) ;

(2) dans l'environnement de test virtuel (18), le capteur virtuel (16) est initialisé avec un réglage de capteur, le réglage de capteur comprenant une position de capteur, une orientation de capteur et/ou au moins un paramètre de capteur ;

(3) les données de capteur virtuel générées par le capteur virtuel (16), qui sont associées au réglage de capteur, sont évaluées sur la base d'au moins une métrique d'évaluation, une zone de détection du capteur virtuel (16) étant incluse dans la métrique d'évaluation, l'évaluation des données de capteur comprenant les étapes suivantes :

(4) il est déterminé si la métrique d'évaluation remplit au moins une condition prédéfinie ;

(5) en cas de résultat négatif, le réglage de capteur du capteur virtuel (16) est adapté et les données de capteur virtuel associées au réglage de capteur adapté sont évaluées selon (3) ;

(6) en cas de résultat positif, le réglage de capteur est émis par le dispositif de calcul en tant que réglage de capteur préféré ; et

(7) un capteur réel (14) dans une application réelle est configuré sur la base du réglage de capteur préféré, **caractérisé en ce que**

la métrique d'évaluation comprend une valeur de fonction d'optimisation, la valeur de fonction d'optimisation étant calculée au moyen d'une fonction d'optimisation et sur la base des données de capteur virtuel, la condition prédéfinie étant que la valeur de fonction d'optimisation corresponde à une valeur sensiblement minimale ou à une valeur sensiblement maximale de la fonction d'optimisation.

2. Procédé selon la revendication 1,
dans lequel l'évaluation des données de capteur est effectuée automatiquement.

3. Procédé selon l'une des revendications précédentes,
dans lequel la métrique d'évaluation est basée sur une comparaison entre une zone de détection du capteur virtuel (16) et une zone prédéfinie (22) dans l'environnement de test virtuel (18).

4. Procédé selon l'une des revendications précédentes,
dans lequel une plage de distance de mesure prédéfinie du capteur virtuel (16) est incluse dans la métrique d'évaluation, la plage de distance de mesure prédéfinie définissant une plage dans laquelle le capteur virtuel génère des valeurs de mesure plausibles.

5. Procédé selon l'une des revendications précédentes,
dans lequel les données de capteur comprennent des informations sur des points de repère, les points de repère étant associés à au moins un point fixe dans l'environnement de test virtuel, une configuration du réglage de capteur du capteur réel (14) dans l'application réelle étant effectuée sur la base des points de repère et des données de capteur du capteur réel (14).

6. Procédé selon l'une des revendications précédentes,
dans lequel la position et/ou l'orientation du capteur réel (14) sont déterminées sur la base des points de repère.

7. Procédé selon l'une des revendications précédentes,
dans lequel le capteur réel (14) est en liaison avec une application de configuration de capteur, le réglage de capteur du capteur réel (14) étant configuré au moyen de l'application de configuration de capteur sur la base du réglage de capteur préféré.

8. Procédé selon l'une des revendications précédentes,
dans lequel un réglage de capteur final du capteur réel (14) est déterminé manuellement ou automatiquement sur la base du réglage de capteur préféré et des informations relatives aux points de repère.

9. Procédé selon l'une des revendications précédentes,
dans lequel des suggestions de modification du réglage de capteur sont soumises à un utilisateur de l'application de configuration de capteur sur la base du réglage de capteur préféré et des informations relatives aux points de repère.

10. Procédé selon l'une des revendications précédentes,
dans lequel d'autres capteurs virtuels (26) sont prévus dans l'environnement de test virtuel (18), une zone de détection des autres capteurs virtuels (26) étant incluse dans la métrique d'évaluation.

11. Procédé selon l'une des revendications précédentes,
dans lequel l'environnement de test virtuel (18), le capteur virtuel (16) et/ou les autres capteurs virtuels (26) sont visualisés sur un écran (30), la zone de détection du capteur virtuel (16) et/ou les zones de détection des autres capteurs virtuels (26) et/ou un chevauchement de la zone de détection du capteur virtuel (16) et/ou des zones de détection des autres capteurs virtuels (26) et/ou de zones non détectées (28) étant mis en évidence visuellement sur l'écran (30), en particulier en couleurs.

12. Procédé selon l'une des revendications précédentes,
dans lequel une pluralité de réglages de capteur, en particulier différents, du capteur virtuel (16) sont émis en tant que réglages de capteur préférés, un réglage de capteur préféré respectif étant associé à un domaine d'application correspondant et/ou à une condition météorologique correspondante.

13. Procédé selon la revendication 12,
dans lequel le réglage de capteur du capteur réel (14) est adapté automatiquement en utilisant la pluralité de réglages de capteur préférés et en fonction du domaine d'application et/ou de la condition météorologique.

14. Système (10) pour déterminer un réglage d'un capteur, comprenant :
un capteur réel (14) et un dispositif de simulation (12) qui est conçu pour :

(1) définir un modèle de simulation qui comprend un environnement de test virtuel (18) et au moins un capteur virtuel (16) ;
(2) initialiser le capteur virtuel (16) avec un réglage de capteur dans l'environnement de test virtuel (18), le réglage de capteur comprenant une position de capteur, une orientation de capteur et/ou au moins un paramètre de capteur ;
(3) évaluer des données de capteur virtuel générées par le capteur virtuel (16) qui sont associées au réglage de capteur sur la base d'au moins une métrique d'évaluation, une zone de détection du capteur virtuel (16) étant incluse dans la métrique d'évaluation, l'évaluation des données de capteur comprenant les étapes suivantes :
(4) il est déterminé si la métrique d'évaluation remplit au moins une condition prédéfinie ;
(5) en cas de résultat négatif, le réglage de capteur du capteur virtuel (16) est adapté et les données de capteur virtuel associées au réglage de capteur adapté sont évaluées selon (3) ;
(6) en cas de résultat positif, le réglage de capteur est émis en tant que réglage de capteur préféré ; et
(7) le réglage de capteur préféré est transmis au capteur réel (14), le système (10) étant conçu pour configurer le capteur réel (14) sur la base du réglage de capteur préféré,

**caractérisé en ce que**
la métrique d'évaluation comprend une valeur de fonction d'optimisation, la valeur de fonction d'optimisation étant calculée au moyen d'une fonction d'optimisation et sur la base des données de capteur virtuel, la condition prédéfinie étant que la valeur de fonction d'optimisation corresponde à une valeur sensiblement minimale ou à une valeur sensiblement maximale de la fonction d'optimisation.

Fig. 1

Fig. 2A

Fig. 2B

Fig. 3B

Fig. 3A

Fig. 4A

Fig. 4B

Fig. 4C

EP 4 495 620 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 11663377 B2
- US 2023169684 A1
- US 9740944 B2